# EUROPEAN PATENT SPECIFICATION

(11) **EP 4 377 883 B1**
(45) Date of publication and mention of the grant of the patent: **04.11.2026**
(21) Application number: 22765707.9
(22) Date of filing: 26.07.2022
(51) Int. Cl.: G06T 7/00, G06T 7/90

(54) **SYSTEMS FOR DETERMINING CALIBRATION STATE OF TEST COATINGS**
SYSTEME ZUR BESTIMMUNG DES KALIBRIERUNGSZUSTANDS VON TESTBESCHICHTUNGEN
SYSTÈMES POUR DÉTERMINER L'ÉTAT D'ÉTALONNAGE DE REVÊTEMENTS D'ESSAI

(30) Priority: 28.07.2021 US 202163226434 P
(43) Date of publication of application: 05.06.2024
(73) Proprietor: PPG Industries Ohio Inc., Cleveland, OH 44111 (US)
(72) Inventor: LEWIS, Mark David, North Ridgeville, Ohio 44039 (US); STAUFER, Angela, Kathleen, Berea, Ohio 44017 (US)
(74) Representative: f & e patent
(86) International application number: PCT/US2022/074123
(87) International publication number: WO 2023/009992

(56) References cited:
- EP-B1- 2 130 014
- US-A1- 2003 208 345
- US-A1- 2004 218 182
- US-A1- 2017 242 570
- US-A1- 2021 181 091

## Description

### BACKGROUND OF THE INVENTION

### 1. Technical Field

The present invention relates to devices, computer-implemented methods, and systems for determining calibration states of external coating systems and test coatings through a graphical user interface.

### 2. Background and Relevant Art

Modern coatings provide several beneficial functions in industry and society. Coatings can protect a coated material from corrosion, such as rust. Coatings can also provide an aesthetic function by providing a particular color and/or texture to an object. For example, most automobiles are coated using paints and various other coatings in order to protect the metal body of the automobile from the elements and also to provide aesthetic visual effects.

In view of the wide-ranging uses for different coatings, it is often desirable to determine whether a "test coating" composition accurately aligns or matches with a "standard coating" composition. As used herein, a "test coating" refers to a coating that has been applied to an asset and/or refers to a coating that is of particular interest, such as in the case where a test coating is being compared to a "standard coating" (aka baseline coating) to determine whether the test coating matches the standard coating. For instance, it might be prudent to determine whether a test coating applied in-the-field at a particular automobile shop accurately aligns with the standard coating. If the test coating does not properly align with the standard coating, any resulting repair to the automobile's coating will not match with the standard coating. Accordingly, as used herein, a test coating comprises any coating of interest that has been applied to any physical object and/or that is used for comparison purposes.

Automotive coatings provide a particularly challenging set of coating parameters to analyze and match. In addition to complex colorants, such as pigments, a conventional automotive coating may comprise effect pigments that provide texture to the coating. For instance, an automotive coating may comprise an effect pigment such as aluminum flakes of a particular color. The aluminum flakes may provide a texture that appears to sparkle. A proper identification of such a coating composition may depend on the correct identification of the presence of aluminum flakes and a proper identification of the color of the aluminum flakes. In order to properly compare a test coating against a standard coating, manufacturers desire to determine the components, or colorants, within the test coating. Traditionally, evaluations involving the comparison of coatings were performed in a very limited manner due to logistic restrictions, some of which required all lab associates from the various labs to attend in-person and perform the visual evaluations. With such traditional systems, comparison could not be performed in a timely manner.

US 2004/218182 A1 provides a portable method for identifying effect pigments (e.g., pearl, aluminum flakes) in vehicle paint to enable accurate field colour matching. Using a handheld microscope (100 1000× magnification, preferably 150 500×) the user visually inspects pigment size, shape, morphology and colour, then compares these observations with physical reference samples or image derived features of known pigments.

US 2003/208345 A1 discloses a method and system for simulating and matching the appearance of single- or multicolor surfaces, especially multi-component coatings (e.g., powder coatings). A user submits a description or image of the desired finish; the system selects templates from a library of known finishes and applies rule-based adjustments (chemistry, composition, application conditions) to generate simulated appearance samples.

US 2017/242570 A1 provides a computer-implemented method for matching a target coating to proposed paint matches. A coating-measurement instrument (e.g., camera-equipped spectrophotometer) supplies texture, sparkle-color, color and color-travel variables of the target. These variables are compared with a database of reference coatings that include human-perceived ratings. The system calculates similarity ratings (effect-texture, sparkle-color, color, travel), displays them on a user interface (icons, sliders, numeric values), and orders the proposed matches according to the strength of similarity.

Thus, there is a need for coating identification methods and systems that are faster, more accurate, and more flexible than the conventional systems that are currently available. There is also a need to improve how coatings are compared against one another (e.g., "test" coatings) and against a baseline or so-called "standard" coating.

The subject matter claimed herein is not limited to embodiments that solve any disadvantages or that operate only in environments such as those described above. Rather, this background is only provided to illustrate one exemplary technology area where some embodiments described herein may be practiced.

### BRIEF SUMMARY

A method is provided to facilitate a comparison process in which a "test" coating is compared against a "standard" coating. For example, a system performing the method can be configured to select a standard coating to operate as a standard (or baseline measurement) for comparison against a test coating to determine whether the test coating sufficiently matches the standard coating. The system determines coating attributes of the test coating. These coating attributes can be based on received digital measurements of the test coating. The test coating was previously applied to an asset. Further, the digital measurement is received from a remotely-located coating system. The system also determines coating attributes of the standard coating. Within a user interface, the system displays (1) a visualization or rendering representative of the test coating and (ii) a visualization or rendering representative of the standard coating. The system performs a comparison between the coating attributes of the test coating and of the standard coating. The system determines whether one or more differences between the coating attributes of the test coating and of the standard coating are within an acceptable or defined difference threshold. Based on that comparison and based on the defined difference threshold, the system displays a match status between the test coating and the standard coating.

A computer system is configured to compare multiple different test coatings against a standard coating, where the multiple different test coatings are applied at multiple different coating systems. The system receives a first digital measurement of a first coating (e.g., a test coating) that was previously applied to a first asset. The first digital measurement is received from a first coating system. The system receives a second digital measurement of a second coating (e.g., another test coating) that was previously applied to a second asset. The second digital measurement is received from a second coating system, which is different from the first coating system. The system also displays (e.g., within a user interface) a first rendering representative of the first coating and the first digital measurement. The system further displays a second rendering representative of the second coating and the second digital measurement. Furthermore, the system displays a third rendering representative of the standard coating. The system displays a first match status between the first coating and the standard coating. The match status is based on a comparison between coating attributes of the first coating and of the standard coating. The system displays a second match status between the second coating and the standard coating. The second match status is based on a comparison between coating attributes of the second coating and of the standard coating.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Additional features and advantages will be set forth in the description which follows, and in part will be obvious from the description, or may be learned by the practice of the teachings herein. Features and advantages of the invention may be realized and obtained by means of the instruments and combinations particularly pointed out in the appended claims. Features of the present invention will become more fully apparent from the following description and appended claims, or may be learned by the practice of the invention as set forth hereinafter.

### BRIEF DESCRIPTION OF THE DRAWINGS

**In** order to describe the manner in which the above-recited and other advantages and features can be obtained, a more particular description of the subject matter briefly described above will be rendered by reference to specific embodiments which are illustrated in the appended drawings. Understanding that these drawings depict only typical embodiments and are not therefore to be considered to be limiting in scope, embodiments will be described and explained with additional specificity and detail through the use of the accompanying drawings in which:
Figure 1 illustrates an example of a coating applied to an asset, such as a vehicle.
Figure 2 illustrates how color palettes or color boards can be used in an attempt to identify and/or match colors.
Figure 3 illustrates how a trial and error process can be used in an attempt to identify and/or match colors.
Figure 4 illustrates an example architecture that is configured to facilitate comparisons between coatings.
Figure 5 illustrates an example flow chart of a method for performing comparisons between coatings.
Figure 6 illustrates an example architecture designed to facilitate the identification, comparison, and display of coatings.
Figure 7 illustrates an example user interface designed to enable ready comparison between coatings.
Figure 8 illustrates another example user interface.
Figure 9 illustrates another example user interface.
Figure 10 illustrates a flowchart of an example method for displaying multiple matched coatings on a user interface to facilitate comparison against a standard coating.

### DETAILED DESCRIPTION

The present invention extends to computerized systems and methods for providing a unique user interface designed to have a particular visual layout. This layout is designed to enable the display of multiple different test coatings and is further designed to facilitate comparison between those test coatings and a standard coating. For instance, the system may be used in a calibration setting where test coatings (applied or used at external coating systems) are being compared against a standard coating, which is an established baseline measurement and which was analyzed at a calibrated facility, to determine how close those test coatings are to the standard coating. Notably, the test coating is a sample of the standard coating and is shipped to each of the external coating systems. That is, the test coatings and the standard coating originate from the same source such that their coating attributes (at least before being applied to an asset) are the same.

For example, a coating identification computer system can determine coating attributes of both a standard coating and a test coating. The system displays (i) renderings of surfaces that are coated using those test coatings and (ii) values that are representative of those measurements. The system also displays a rendering of a standard coating. The system determines match statuses between the test coatings and the standard coating. As used herein, the terms "visualization" and "rendering" (and their variants) are interchangeable with one another and generally refer to a user interface element that is displayed on a user interface. By performing the disclosed operations, the systems are able to gauge whether external coating systems are accurately calibrated and using coatings that are true and aligned with standard coatings.

### Examples Of Technical Benefits, Improvements, And Practical Applications

The following section outlines some example improvements and practical applications provided by the disclosed embodiments. It will be appreciated, however, that these are just examples only and that the embodiments are not limited to only these improvements.

The disclosed systems and methods bring about numerous real and practical benefits to the technical field. For instance, the systems are able to beneficially perform visual evaluations between multiple external coating systems or labs that can be located in various parts of the world. Traditionally, such evaluations were performed in a very limited manner due to logistic restrictions, some of which required all lab associates from the various labs to attend in-person and perform the visual evaluations. With such traditional systems, calibrations could not be performed in a timely manner. The systems also provide an aesthetic and intuitive user interface designed to help with the calibration process (i.e., a color comparison process). Through use of this improved user interface, users can quickly compare and contrast coatings in order to determine whether the coatings used by external coating systems accurately align with coatings that are deemed to be standards.

By following the disclosed principles, the systems and methods also enable improved use of a computer system. That is, instead of relying on traditional techniques for estimating or guessing whether coatings match or align with one another (and thereby causing increased back-and-forth communications, resulting in increased network usage), the systems are designed to facilitate improved (and quicker) coating comparison processes. By providing a more accurate comparison process, less back-and-forth operations will be performed, thereby freeing up computing resources to be used on other matters.

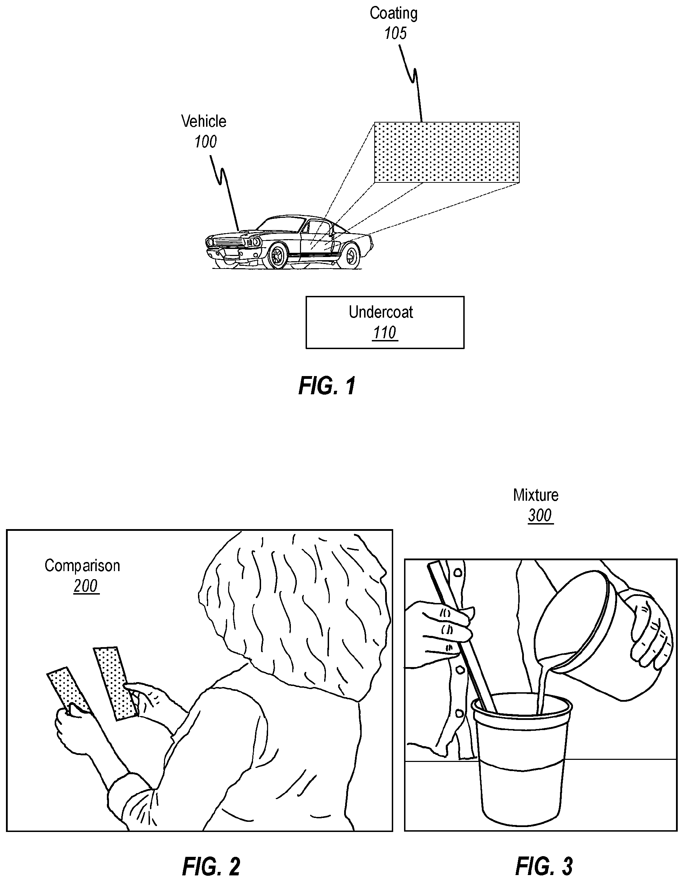

For example, Figure 1 illustrates an example of an asset in the form of a vehicle 100. One will appreciate how other types of assets can also be used, such as low-cost calibration boards or surfaces. It is often desirable to determine whether the coating 105 (and potentially the undercoat 110 that is applied prior to the application of the coating 105) is calibrated relative to a standard coating. The coating 105 can be any type of coating, including a tricoat. It is often desirable to determine whether a coating currently being used at an external coating system matches with or is calibrated relative to a standard coating. **In** other words, it is beneficial to determine the calibration state of the external coating system.

A coating identification computer system can receive spectrometric data of a test coating. The spectrometric data may be gathered by a camera, a spectrometer, such as spectrophotometer, or any other device capable of scanning a coating and providing characterization data relating to attributes of the coating. The spectrometric data can comprise spectrophotometric data, spectrocolorimetric data, data acquired via image processing, and/or any other similar data. The coating identification computer system can process the spectrometric data through a probabilistic colorant analysis. The probabilistic colorant analysis identifies a set of colorants that are likely present in the coating and associates with each colorant a probability that a particular colorant is present.

As used herein, colorants include pigments, effect pigments, dyes, inks, stains, tricoats, XIRALLIC, gonioapparent pigment, pearlescent pigment, CIELab color space values, and any other related coating or coating component. The identified set of colorants is then beneficially fed into a formulation engine (optionally in decreasing order of calculated probability of the colorant being present in the test coating) until a formulation match is identified. The present invention can generate accurate, reproducible results using this approach in a matter of seconds or less, thereby resulting in significant improvements to the field. The resulting data constitutes coating attributes.

Several conventional formulation engines and methodologies attempt to encompass colorant selection and formulation via various algorithms. Such techniques and/or algorithms can be based on spectrometric data, or characterization data relating to attributes of the coating. For example, spectrometric data may include spectrophotometric data, spectrocolorimetric data, data acquired via image processing, and/or related metrics.

Many conventional colorant identification packages and formulation engines take a "brute" force, or "guess-and-check" type of approach to provide formulations and colorant information to their users. For example, a comparison 200 brute force process can be used, as shown in Figure 2. The comparison 200 process generally involves attempting to visually match colors via use of a color palette to determine a coating' s properties. Users would compare and contrast coatings against those provided by a palette to determine the color and attributes of a test coating. This process is often extremely time consuming and can be wrought with errors.

Another technique for identifying attributes of a coating includes a mixture 300 brute force process, as shown in Figure 3. Here, users would mix paint / coating colors to generate a particular coating. Because the mixture process is controlled, the attributes of the resulting coating are known and can then be used to determine whether the test coating is the same as the mixture. Similar to the comparison 200 process, however, the mixture 300 process was also wrought with many errors.

Manufacturers commonly use the guess-and-check approach, or brute force method, in which nearly all available colorants, or a subset of all available colorants, are combined in all combinations available given an end number of colorants desired in the final match. Conventional "brute" force methods of coating identification (and potentially subsequent calibration) are highly inefficient. Indeed, such conventional methods may consume significant processing time and large amounts of memory to store all of the available colorants.

Additionally, these methods are error prone because they tend to work on a "good enough" basis. For example, these methods are not focused on identifying the actual components of a coating. Thus, when calibration is performed, the results of that calibration are not overly precise because the initial input was also not very precise. Brute force methods iterate through all available colorants, until a particular output is a good enough, and then that output is compared against the standard coating during calibration. In many cases, the "good enough coating" may comprise very different colorants than those that are in the standard coating, thereby leading to a scenario where the calibration process is essentially useless because of faulty data.

The poor accuracy, slow performance, and high system resources used by conventional coating identification systems present significant technical challenges within the field. The present invention can address one or more of these technical challenges. For instance, a coating identification computer system of the present invention can provide significant technical improvements over conventional coating identification and formulation systems. For example, coating identification computer systems can analytically identify potential colorants within a coating. As used herein, "potential colorants" are colorants that are identified by a probabilistic colorant analysis as likely being in a particular coating (e.g., a test coating). The potential colorants are fed into a formulation or analysis engine that is seeded with colorants that have already been identified as having a high probability of being present within the coating. Resulting coating formulations are more likely to correctly match the formulation of the coating because the colorants are not simply guessed-and-checked. By accurately identifying a test coating, the subsequent calibration process is much improved because of higher quality or more accurate data being used.

Additionally, a coating identification computer system can provide significant performance improvements over conventional coating identification and formulation systems. For example, instead of brute force guess-and-check methods that iterate through an entire library of colorants, the present invention can seed a formulation engine with analytically identified potential colorants from within the coating. As such, resulting coating formulations are identified significantly faster than conventional methods that randomly guess, or iterate through a randomly ordered list, what colorants may be present within a coating. As noted, this can be a dramatic time savings while at the same time providing significant improvements in accuracy. Additional benefits can be realized as a result of an improved user interface designed to enable users to compare test coatings against a standard coating.

It should be noted that the disclosed "test coatings," as described earlier, originate from the same source as a "standard coating." For instance, a sample of the standard coating is shipped to any number of external coating systems for application on an asset. Even though the coatings are the same (at least before application onto an asset) and their attributes are known (e.g., as a result of performing an analysis on the standard coating prior to the test coating being shipped), the above identification processes are still beneficial to perform at an external coating system in order to determine how the test coating appears when applied at that external coating system. Indeed, differences between the applied test coating and the applied standard coating may occur as a result of differences in application techniques, tools, or even environmental conditions between the two locations (i.e. the calibration facility where the standard coating was applied to an asset and the external coating system where the test coating was applied to an asset). By way of example, samples from the same coating source can be applied at five different locations. Due to differences in conditions at those five locations, it may be the case that five different sets of coating attributes are identified (e.g., different shades of the supposedly same color). As such, even though the attributes of the test coating are known before application, it is still beneficial to perform the above-described identification processes to determine the attributes of the test coating after it has been applied at an external coating environment / system.

While a few technical benefits have been explicitly pointed out for the sake of example, one will appreciate that additional technical benefits may be provided according to the present invention. It is also worthwhile to note how the articles "a" or "an" can include "one or more." That is, although the invention has been described in terms of 'a' feature, 'an' element, and the like, one or more of any of these components or other recited components can be used according to the present invention.

### Example Architecture And Method For Identifying A Best Fit Match

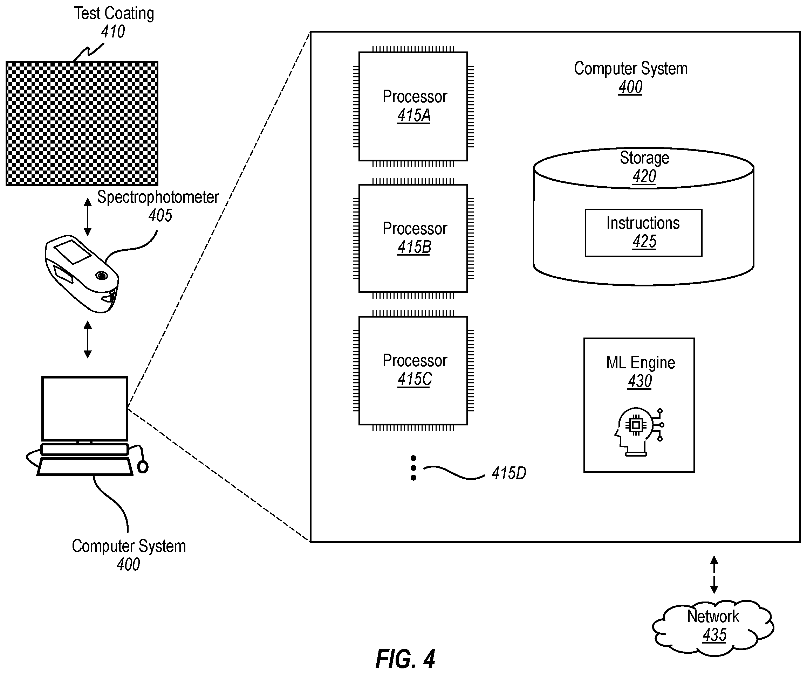

Attention will now be directed to Figure 4, which illustrates an example computer system 400 designed to provide improved processes for identifying a test color and for facilitating comparison between test coatings and a standard coating (i.e. a calibration process, which can include comparisons between the test coating attributes and the attributes of the standard coating, such as OEM color codes). The computer system 400 is able to communicate with a spectrophotometer 405 to acquire initial information (e.g., the color information described earlier, such as information about pigments, dyes, CIELab color space values) about a test coating 410, which is representative of the coating 105 from Figure 1. This data is obtained at an external coating system, which is different from a calibration facility where a standard coating was applied and analyzed. Accordingly, in some cases, the coating attributes of the standard coating can be determined using spectrometric data from a coating system that is different from the remotely-located coating systems for the test coatings.

As shown, the computer system 400 includes one or more processors, such as processor 415A, processor 415B, and processor 415C. The ellipsis 415D illustrates how any number of processors may be used. The computer system 400 also includes one or more computer-readable hardware storage devices, such as storage 420. The storage 420 includes instructions 425 that are executable by the processors (e.g., 415A, 415B, and/or 415C) to configure the computer system 400 to perform any number of operations, some of which will be discussed momentarily. In some cases, the computer system 400 also includes a machine learning (ML) engine 430 that is able to be trained to perform specialized operations. The computer system is also able to communicate with remote devices via the network 435.

Any type of ML algorithm, model, machine learning, or neural network may be used to identify coatings and/or to compare coatings. As used herein, reference to "machine learning" or to a ML model or to a "neural network" may include any type of machine learning algorithm or device, neural network (e.g., convolutional neural network(s), multilayer neural network(s), recursive neural network(s), deep neural network(s), dynamic neural network(s), etc.), decision tree model(s) (e.g., decision trees, random forests, and gradient boosted trees), linear regression model(s) or logistic regression model(s), support vector machine(s) ("SVM"), artificial intelligence device(s), or any other type of intelligent computing system. Any amount of training data may be used (and perhaps later refined) to train the machine learning algorithm to dynamically perform the disclosed operations. Further details on attributes of the computer system will be provided later.

### Using A User Interface To Visually Compare Coatings

The following discussion now refers to a number of methods and method acts that may be performed. Although the method acts may be discussed in a certain order or illustrated in a flow chart as occurring in a particular order, no particular ordering is required unless specifically stated, or required because an act is dependent on another act being completed prior to the act being performed.

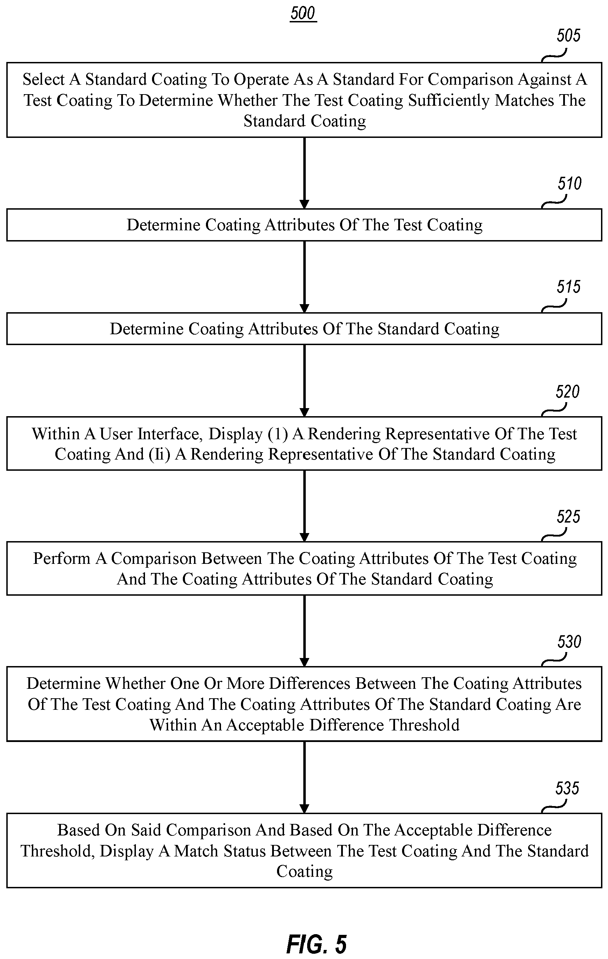

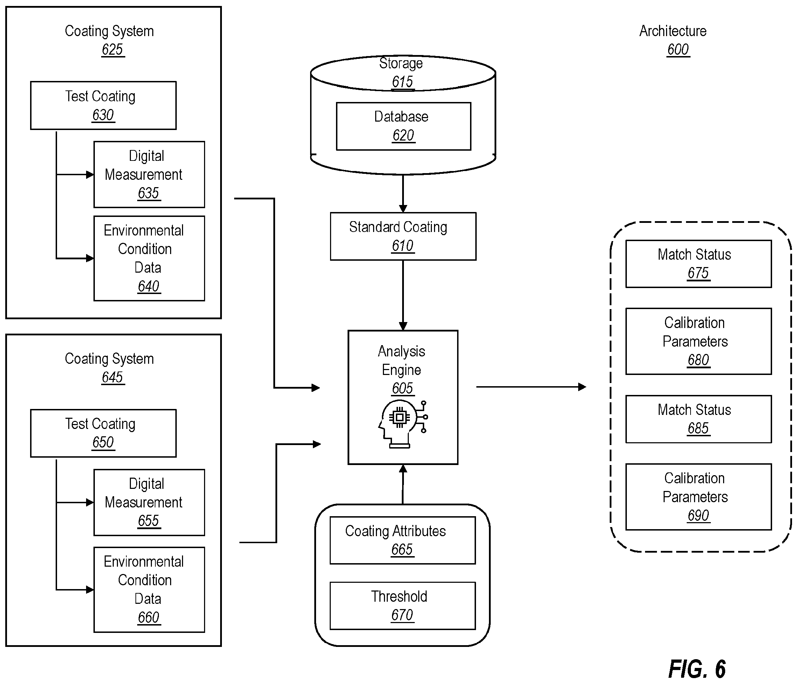

Attention will now be directed to Figure 5, which illustrates a flowchart of an example method 500 for providing a user interface designed to facilitate the ability to visually compare and contrast a test coating against a standard coating. As used herein, a "standard" coating refers to a baseline or true coating, while a "test" coating is a sampled version of that standard coating and has been shipped to an external coating system for application and analysis. The disclosed operations can beneficially be performed in order to gauge the calibration state or status of an external coating system, which is used to apply the test coating to an asset for analysis. The method 500 may be performed by the computer system 400 of Figure 4. Similarly, the architecture 600 of Figure 6 can also be used. As such, frequent reference will be made to Figure 6 while the acts of method 500 are presented.

To reiterate, it should be noted how each of the disclosed external coating systems are initially provided with samples from the same source (i.e. a standard coating). For instance, a large batch of a standard coating can be generated, where the attributes of that standard coating are determined and known. Additionally, the environmental conditions where this standard coating was generated are also known as well as the tools and techniques for applying that standard coating. For example, the standard coating can be applied to an asset at a calibrated facility in order to determine its attributes.

Portions of that batch can then be delivered to any number of external coating systems. This shipped "test" coating is then applied to an asset at that external facility, as will be described in more detail shortly. After the test coating is applied, a tool (e.g., a spectrophotometer) can be used to determine the attributes of the test coating as it has been applied at that particular external coating system. If the "conditions" (which include environmental conditions, tools, techniques, and so forth) at the external coating system are in alignment with the conditions present when the standard coating was applied and analyzed, then the attributes of the applied test coating should sufficiently match (e.g., within a threshold) those attributes of the standard coating when it was applied and analyzed at its respective facility (e.g., a so-called "calibrated facility"). Deviations between the attributes of the applied test coating (as applied at the external coating system) and the attributes of the standard coating (as applied at the calibrated facility) indicate differences in any number of factors or conditions, such as environmental factors, application factors or techniques, and/or asset or tool factors. By identifying such deviations, corrections can then be made in order to bring the conditions at the external coating system into alignment with the conditions at the calibrated facility to thereby ensure any subsequent coatings applied at the external coating system will be applied in a calibrated scenario or environment.

With that understanding, method 500 includes an act (act 505) of selecting a standard coating to operate as a standard for comparison against a test coating to determine whether the test coating sufficiently matches the standard coating. For instance, the test coating can be a sampled version of a batch coating that was generated at a calibrated facility and that is being used as a standard for comparison. That is, the test coating is the same as the standard coating (at least prior to application onto an asset), but those coatings are applied at different facilities. The test coating (which is sampled from the batch coating) can be shipped to any number of external coating systems and then applied to an asset. If conditions were the same between the different facilities, then the test coating should sufficiently match (e.g., within a threshold amount) with the standard coating because the two coatings originated from the same source (i.e. the batch coating). Differences between the test coating and the standard coating suggests the equipment and/or environmental conditions (or some other property) at the external coating system are out of calibration relative to the calibrated facility. Once this information is known, then operations can be performed to bring the external coating system into calibration.

By way of example, the analysis engine 605 in Figure 6 is able to select a standard coating 610 from storage 615, or rather, from a database 620 saved in the storage 615. The standard coating 610 can have a barcode, QR code, and/or some other identifier that is retained in a database 620. The selection process may be guided by user input, or it may be performed automatically. A portion of this standard coating 610 can then be delivered to any number of external coating systems to conduct the calibration determination. Additionally, the standard coating can be applied to an asset and then analyzed to determine its coating attributes.

A user can select the standard coating when a calibration test is desired to be performed to determine whether the received properties of the test coating (which was sampled from the standard coating and which was shipped to an external coating system) match the properties of the standard coating. The standard coating can also be automatically selected, and a sample can be automatically delivered and used as the test coating for analysis. Accordingly, any standard coating can be used and sampled, and the sample can be delivered for use as a test coating.

Returning to Figure 5, act 510 includes determining coating attributes of the test coating. For instance, the coating attributes of the test coating can be based on received digital measurements of the test coating, which was previously applied to an asset. Digital measurements can include, but are not limited to, raw physical measurements, predicted measurements, spectral measurements, or other colorimetric measurements including, but not limited to, CIELab (i.e. L*a*b*) color space values, spectrophotometer reads, RGB, gamma-RGB values, tricoats, and/or XYZ tristimulus data. Such measurements can be obtained using the identification techniques mentioned earlier.

By way of additional detail, a standard coating can be selected during a calibration event. The system can then request the analysis of a test coating from an external system, where the test coating will be reviewed and analyzed to determine whether the external coating system's use or application of that test coating sufficiently aligns or is calibrated with how the standard coating was applied to an asset at a calibrated facility. To do so, the digital measurement of the (applied) test coating is received from a remotely-located or external coating system. Similarly, the digital measurement of the (applied) standard coating is also obtained in a similar manner as described previously and is received for analysis.

The computer system 400 is able to communicate with the spectrophotometer 405 via the network 435 in Figure 4. The spectrophotometer 405 can be operated on an asset (e.g., a vehicle) in order to acquire digital measurements of the test coating (or standard coating). **In** some cases, the coating can be applied to a test calibration board or surface (used for calibrating events) instead of a high cost asset, such as a vehicle.

Additionally, or alternatively, the digital measurements may have been collected at a prior point in time and perhaps stored in a database and associated or matched with the asset or with the specific coating. The computer system 400 can then communicate with the database, which may be remote or local, to acquire the measurement information. The digital measurements include a digital version or rendition of the attributes of the test coating. Such measurements can include both paint color characteristics as well as texture characteristics, such as perhaps flake content (e.g., aluminum flakes for a sparkle effect) and/or other texture features of the test coating. **In** this regard, the computer system is able to obtain digital measurements reflecting a test coating's complex colorants, such as pigments, dyes, inks, pigment effects, texturing, CIELab color space values, tricoat values, and so force. Such data can be provided by the spectrophotometer described in Figure 4.

With reference to Figure 6, the architecture 600 is shown as including a remotely located coating system 625. The coating system 625 can be located at a paint shop or any other type of facility. As shown, the coating system 625 can be used to analyze a test coating 630, which is representative of the test coatings mentioned earlier. Although not shown in Figure 6, the coating system 625 can include a spectrophotometer, which can be used to obtain a digital measurement 635 of the test coating 630. Additionally, the coating system 625 is able to obtain environmental condition data 640 detailing the environmental conditions in which the digital measurement 635 was obtained. Examples of environmental data include, but are not limited to, temperature, humidity, barometric pressure, elevation, and so forth. Such environmental conditions can impact attributes (e.g., application, appearance, etc.) of the test coating 630. Because the test coating 630 is a sampled version of a selected standard coating, differences between the test coating 630 and the standard coating suggest the tools, application techniques, and/or environmental conditions of the coating system 625 are not what they should be (i.e. out of calibration). By identifying such differences, the embodiments can then trigger the coating system 625 to undergo a calibration event so that subsequent applications of the test coating 630 will align with the standard coating.

Figure 6 shows a second coating system 645. Similar to the coating system 625, the coating system 645 is able to analyze a test coating 650 to obtain a digital measurement 655 and environmental condition data 660, along with other data, such as tools and application techniques. Notably, the test coating 650 is also a sampled version of the standard coating. That is, both the test coating 630 and the test coating 650 originate from the same source and were shipped to the different external facilities in order to determine how those test coatings compare to the standard coating when applied at those different coating systems.

The analysis engine 605 is able to communicate with any number of coating systems to acquire the digital measurements, environmental condition data, and any other data that is available. During calibration events, the analysis engine 605 can prompt the external coating systems (e.g., coating system 625 and 645) to provide data on or to analyze coating samples (e.g., the test coatings) that are to be tested to determine whether those samples sufficiently align or match with a selected standard coating.

Returning to Figure 5, method 500 also includes an act (act 515) of determining coating attributes of the standard coating. For instance, the standard coating may have been applied at a calibrated facility where the application techniques, environmental conditions, and even tools used are all calibrated and set to desired values. The "conditions' (e.g., the techniques, environmental conditions, tools, etc.) influence how the standard coating is applied. It is desirable to have these same or similar conditions at the external coating systems to ensure consistent outcomes at different locations.

By way of additional information, the test coating, which is a sample of the standard coating, was applied to an asset and then analyzed at an external coating system. The coating attributes of the test coating can thus be obtained using environmental tools, spectrophotometers, application tools, and so forth. Similarly, determining the coating attributes of the standard coating can be performed by obtaining related information (e.g., for instance, the standard coating was applied to an asset and then analyzed at a calibrated facility).

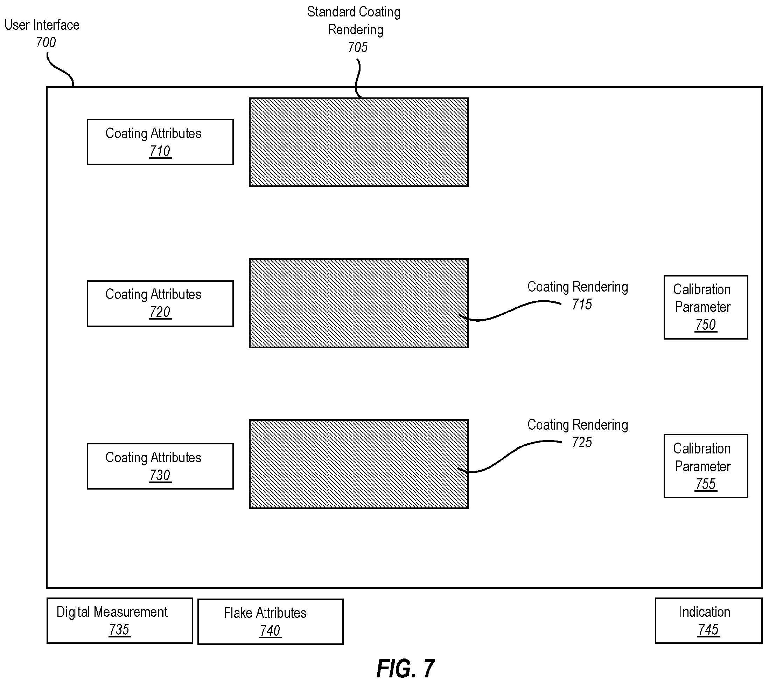

Act 520 then involves displaying (within a user interface) (1) a visualization or rendering (e.g., perhaps a 3D visualization or rendering) representative of the test coating and (ii) a visualization or rendering (e.g., perhaps a 3D visualization or rendering) representative of the standard coating. In some cases, the visualization or rendering is of surfaces coated with the coatings, and the surfaces are visualized or rendered as curved surfaces that are representative of an asset (e.g., a vehicle or a calibration board or surface) to which the test coating was previously applied or, more simply, the visualization or rendering of the surface comprises a visualization or rendering of an asset (e.g., a vehicle at an external coating system that submitted the digital measurement of the test coating) to which the test coating was previously applied. That visualization or rendering can also be visualized, displayed, or rendered as a three-dimensional (3D) surface having curved features. Figure 7 provides an example illustration of the user interface.

Specifically, Figure 7 shows a user interface 700 that is displaying a standard coating rendering 705 with its coating attributes 710, a coating rendering 715 (e.g., a "test" coating) with its coating attributes 720, and a coating rendering 725 (e.g., another "test" coating) with its coating attributes 730. Notice, the coating rendering 715 (e.g., a "first" rendering), the coating rendering 725 (e.g., a "second" rendering), and the standard coating rendering 705 (e.g., a "third" rendering) are displayed proximately with one another.

To be "proximate," the user interface element is positioned within a certain number of pixels relative to another element and/or positioned within a specific screen distance relative to that other element. Proximity can potentially change based on the size of the screen being used. For instance, with larger screen sizes, the system can optionally adjust the proximity threshold to allow the user interface elements to be located farther away than when a smaller screen size is used. Accordingly, it may be the case (though not always) that proximity is dependent on the size of the screen on which the user interface is being displayed.

The coating attributes 710, 720, and 730 can include a digital measurement 735 or measurements representative of the spectrophotometric data mentioned earlier as well as any of the other information (e.g., environmental data during application, tools used during application, etc.). By way of example, the coating attributes 710, 720, and 730 can include color characteristics, flake attributes 740, undercoat attributes, CIELab color space values (e.g., colors can be expressed in terms of perceptual lightness, red, green, blue, and yellow), and so on. The coating attributes 710, 720, and 730 can also include environmental data detailing when and under what conditions (e.g., temperature, humidity, elevation, etc.) the coatings were applied. The coating attributes 710, 720, and 730 can include any other type of coating attributes, such as pigments, dyes, and flake attributes 740 (e.g., aluminum, organic mix, man-made mica, etc.).

The displayed coating attributes 720 and 730 from Figure 7 are illustrative of the attributes of the "test coating." Similarly, the coating attributes 710 are illustrative of the attributes of the "standard coating." If the remotely-located or external coating systems were calibrated, then the attributes of the test coating should align (e.g., be within a threshold value relative to one another) with the attributes of the standard coating because the test coating is a sampled version of the standard coating and so there should (under preferred conditions) not be any differences (or only minor differences less than the threshold) between those coatings. Deviations between the attributes indicates that differences exist between application techniques, assets, environmental conditions, tools, and so forth.

In Figure 5, act 525 includes performing a comparison between the coating attributes of the test coating and the coating attributes of the standard coating. This comparison can occur by comparing the coating attributes, such as the digital measurements, of the test coatings against those of the standard coating. As indicated above, differences between those attributes indicate that the external coating system is out of calibration relative to the facility where the standard coating was applied to an asset and analyzed.

Act 530 involves determining whether one or more differences between the coating attributes of the test coating and the coating attributes of the standard coating are within a defined difference threshold. If the test coating's properties / attributes are sufficiently close to the standard coating's properties / attributes (e.g., within the determined threshold), then a determination can be made that the external coating system is sufficiently calibrated with the calibrated facility where the standard coating was analyzed. On the other hand, if there is a sufficiently large divergence (e.g., the results exceed the threshold), then a determination can be made that the external coating system is not calibrated relative to the calibrated facility.

Figure 6 shows how the analysis engine 605 is able to analyze the coating attributes 665 of the different coatings (e.g., the standard coating and the test coatings). The analysis engine 605 is also able to consider a threshold 670 when performing the comparison process. For instance, if the coating attributes of the test coating are within the defined acceptable threshold 670 relative to the coating attributes of the standard coating, then the analysis engine 605 will determine the coating system where a particular test coating was used / applied /analyzed is sufficiently matched or calibrated with the calibrated facility where the standard coating was used / applied / analyzed.

Based on that comparison and based on the acceptable / defined difference threshold, act 535 in Figure 5 includes displaying a match status between the test and standard coatings. The match status indicates that the external coating system is calibrated relative to the calibrated facility.

Figure 6 shows how the analysis engine 605 is able to determine whether the coatings match and then produces a match status 675. If the coatings sufficiently match (e.g., are within the threshold 670 relative to one another), then the match status 675 will reflect a "matched" status or perhaps a "calibrated" status. On the other hand, if the coatings do not sufficiently match, then the match status 675 will reflect a "not matched" status or perhaps a "not calibrated" status. Of course, other status indicators can also be used. In some cases, the analysis engine 605 will provide a numerical indicator, such as perhaps a percentage value, to reflect how closely the test coatings match with the standard coating. For instance, it may be the case that one test coating matches with the standard coating 97% while another test coating matches with the standard coating only 92%.

In order to be considered a "match" or "calibrated," the respective parameters of the test coating are within a threshold value to corresponding parameters identified for the standard coating, or rather. For instance, suppose the actual red color value of the standard coating was "x." A threshold can be set so that if a test coating's red value was within plus or minus the threshold value of the standard coating's red value, then the test coating would be listed as sufficiently matching the standard coating.

In some cases, the threshold value (e.g., a "defined difference threshold") can be set to *0.1%, 0.5%,* 1%, 2%, 3%, 4%, 5%, 10% or more than 10% of the actual value (or any value therebetween), whatever that value might be. For example, if the test coating's attributes are within plus or minus 1% of the actual value, then it may be the case that the test coating's attribute is within the defined difference threshold. Similar thresholds can be set for the other attributes.

One value might exceed a threshold, but the average of all of a test coating's attributes might sufficiently fall within the average threshold of all of the actual standard coating's attributes. In a simplified example, suppose a test coating had the following attributes: a red pigment that was within 1% of the standard coating's red pigment (i.e. the red pigment of the test coating matched 99% with the red pigment of the standard coating) and a blue pigment that was 0.1% of the standard coating's blue pigment (i.e. the blue pigment of the test coating matched 99.9% with the blue pigment of the standard coating). Suppose also the threshold value was set to ±0.8%; meaning that if a test coating's combined attributes were within ±0.8% of the standard coating's combined attributes, then the test coating would be tagged or flagged as being a match with the standard coating.

Taking the average of the test coating's parameters would result in the following average: (1% + 0.1%) / 2 = 0.55%. In this example case, the 0.55% average is within the ±0.8% threshold range, so the test coating would be tagged as being a match. Of course, this is an example only, and other techniques can be used to determine whether a test coating sufficiently matches with a standard coating.

In some cases, the user interface can display attributes for multiple test coatings, as shown in Figure 7. The user interface can rank these test coatings based on how close they are relative to the attributes of the standard coating. That is, a ranked list of test coatings can be displayed by the user interface. A user can then review the ranked list to determine which corresponding external coating systems or facilities are calibrated or not calibrated relative to the calibrated facility where the standard coating was analyzed. Lower ranked systems, which far deviate from what they should be, can optionally be prioritized in order to bring them into a calibrated state.

Optionally, the system can trigger a calibration event that can attempt to modify parameters or conditions at an external coating system in order to bring the conditions at the external coating system into calibration with the calibrated facility where the standard coating was analyzed. That is, the system can generate a set of calibration parameters 680 in Figure 6 that can be used by the coating system 625 to modify conditions involved with applying coatings at that location. The calibration parameters 680 can delineate environmental conditions that should be changed, tools that should be used (and also calibration state or maintenance of those tools), techniques that should be followed to apply a coating, where to apply the coating, or any other attributes that should be modified in order to ensure subsequent applications of the test coating align with the standard coating. The calibration parameters can change or modify any variables contributing to a misalignment between the external coating system and the calibrated facility.

Figure 6 shows a second match status 685 and a second set of calibration parameters 690, which are associated with the coating system 645. In this regard, the analysis engine 605 can analyze coatings from multiple different coating systems.

The user interface 700 shows how an indication 745 can be provided, where the indication 745 can be reflective of the match status mentioned in act 535. Additionally, the user interface 700 can display a set of calibration parameters, as shown by calibration parameter 750 and 755.

Accordingly, the system can generate a notification or indication indicating a set of calibration parameters that, if implemented, modify any number of conditions associated with applying a test coating to an asset at an external coating system in order to ensure subsequent applications of that test coating align with the standard coating.

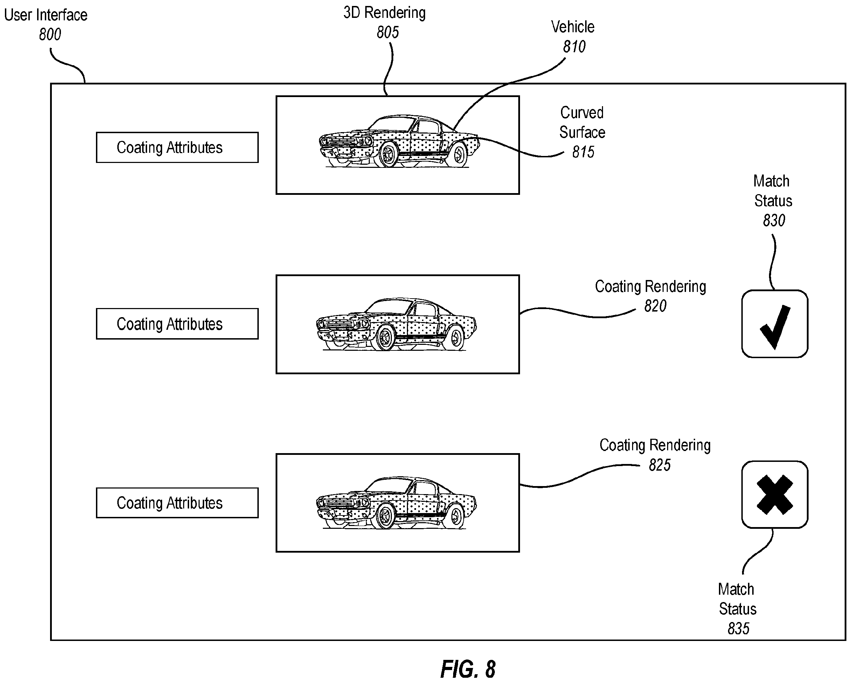

Figure 8 shows an example user interface 800 that includes a 3D rendering 805 of a vehicle 810 having a curved surface 815. The curved surface 815 is currently coated using the standard coating.

The user interface 800 also shows a coating rendering 820, which shows a curved surface that is coated with one of the test coatings, and a coating rendering 835, which also shows a curved surface that is coated with a different one of the test coatings. By following the principles discussed earlier, the user interface 800 can be updated to reflect a match status between the test coatings and the standard coating. For instance, the match status 830 is shown as having a positive check box, indicating that the coating associated with the coating rendering 820 sufficiently matches (as determined using the threshold mentioned earlier) with the standard coating. On the other hand, the match status 835 is shown as having a negative "x" box, indicating that the coating associated with the coating rendering 825 does not sufficiently match with the standard coating.

In some cases, a match status can include a mathematical representation of a mathematical difference between the coating attributes of the test coating and of the standard coating. For instance, the user interface can display differences between the digital measurements of the standard coating and the test coating. The differences can reflect an absolute value difference and/or a percentage difference (e.g., how closely calibrated or matched the test coating is or how far out of alignment the test coating is). In some cases, the match status can include differences in environmental conditions, differences in tools used, or even differences in techniques used with regard to how the test coating was applied to an asset and with regard to how the standard coating was applied to an asset. Optionally, the mathematical representation can include RGB color space values, CIELab color space values, CMYK color space values, HSV color space values, HSL color space values, and so on. As an example, in the RGB color space, one shade of the color red can be represented as the mathematical value [189 99 91] while in the CIELab color space that same shade of the color red can be represented as the mathematical value [52.2540 34.8412 21.3002]. In the CMYK color space, that same shade of the color red can be represented as the mathematical value [0% 48% 52% 26%]. Similarly, in the HSV color space, that same shade of red can be represented as the mathematical value [5° 52% 74%]. Furthermore, in the HSL color space, that same shade of red can be represented as the mathematical value [5° 43% 55%]. Accordingly, a color can be represented using a mathematical value in a defined color space.

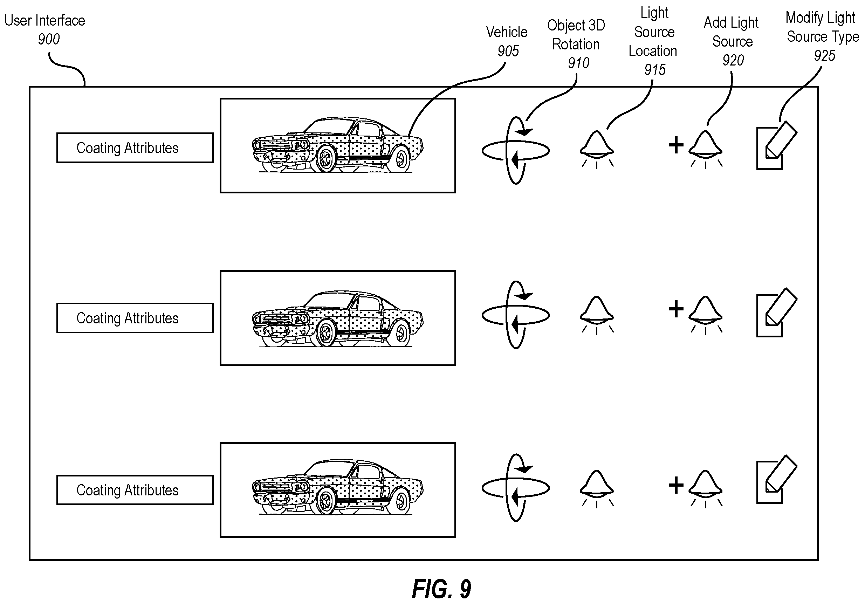

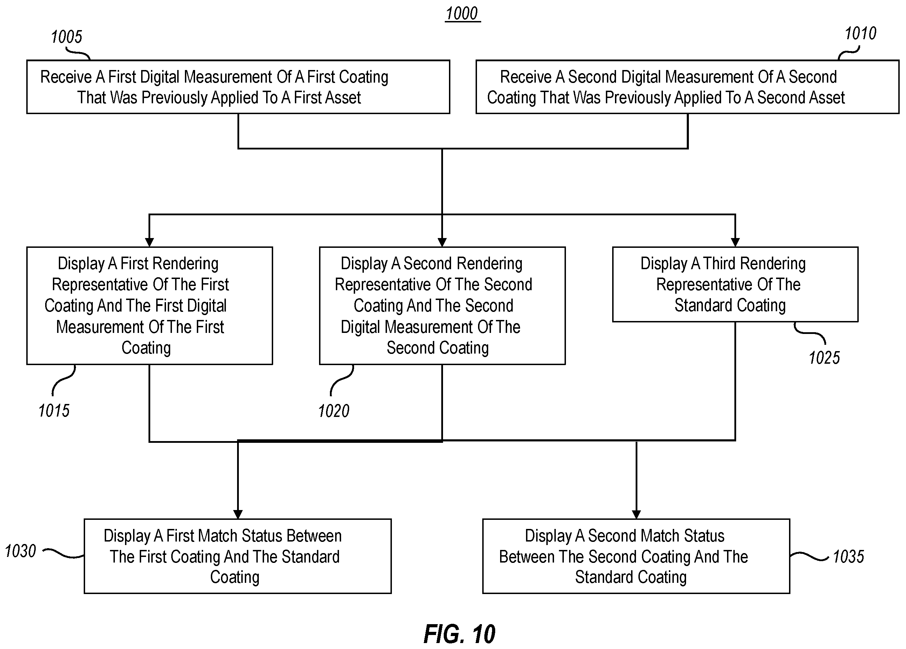

Attention will now be directed to Figures 9 and 10, which illustrate additional examples of a user interface and an example method. The attributes of this user interface can be combined with the example user interface 700 of Figure 7. To be clear, the features of any one user interface described herein can be combined with the features of any other one or more of the disclosed user interfaces, and none of the disclosed user interfaces are mutually exclusive relative to one another.

Figure 9 shows an example user interface 900 that is displaying a 3D preview of a vehicle 905 that is coated with the standard coating. The other two illustrated vehicles are coated with test coatings. With this user interface 900, a user can manipulate the vehicle 905 (as well as any of the other vehicles), as shown by the object 3D rotation 910. That is, the user can use a cursor or finger (in the case a touch screen is used) to touch the vehicles and to move them in different directions and to also zoom in or out. The vehicles can be moved in any direction such that different parts of the vehicles can be exposed. **In** this regard, the renderings of the vehicles are three-dimensional (3D) renderings that are moveable to visually depict different angles of the vehicles. Accordingly, the 3D rendition of the vehicle is fully rotatable. Such features can be used during the calibration event to determine whether the test coatings visually align with the standard coating, especially when viewed from different perspectives.

Figure 9 also shows an option to modify the light source location 915. For instance, in one example case, a light source might be positioned at an angle at the front of one of the vehicles. The light source can be moved to a different location, such as perhaps over the top of the vehicle, to the side of the vehicle, behind the vehicle, or at any other location. The separation distance between the light source and the vehicle can also be modified, such as far separations or close separations. Accordingly, the location, placement, angle, and distance of the light source relative to the vehicle can be modified to facilitate the alignment and calibration process. By modifying the light source in this manner, a user can observe how the standard and/or test coatings appear in different circumstances.

Figure 9 also shows an option (e.g., add light source 920) to add (or remove) one or more light sources. For instance, it may be the case that an existing light source is positioned in front of a vehicle. By selecting the add light source 920, a user can add (or delete) one or more light sources to facilitate the alignment and calibration process. A second light source can be added to the 3D preview of the vehicle (or any vehicle). Perhaps this second light source is located behind the vehicle.

Figure 9 also shows an option to modify light source type 925. By selecting this option, the user can modify various attributes of a light source to facilitate the calibration process. For instance, the user can modify the color of the light source. The user can modify the brightness as well. The user can also modify the type of illumination, such as use of an incandescent light type of light bulb or an LED type of light. The user can also modify whether a flood lamp type of light is used (i.e. light that broadly illuminates a given area) or whether a spotlight type of light is used (i.e. light that is focused to illuminate a particular area).

The different user interface features mentioned above are beneficial for performing the comparison and calibration processes described herein. Indeed, by providing visual indications of the coatings, a user is able visually compare and contrast the different coatings. Such comparison can also help with the comparison process and for user involvement in that process.

Attention will now be directed to Figure 10, which illustrates a flowchart of an example method 1000 for visually displaying multiple different test coatings on a user interface to facilitate comparison against a standard coating. This comparison can be used to determine whether test coatings applied at external coating systems sufficiently match a standard coating that is applied at a calibrated facility. In doing so, the embodiments can determine whether the conditions at the external coating systems are calibrated with the conditions at the calibrated facility. Notably, the multiple different test coatings are received at multiple different coating systems and tested to determine whether they align with a standard coating. The method 1000 may be performed via the architecture 600 of Figure 6 and any of the user interfaces illustrated thus far.

Method 1000 includes an act (act 1005) of receiving a first digital measurement of a first coating that was previously applied to a first asset at a first coating system. In some cases, the asset is a vehicle while in other cases the asset is a calibration board or surface.

The first coating should supposedly match with a standard coating because the first coating is a sample of that standard coating. As discussed, the system can select a standard coating, obtain samples of that standard coating, ship those samples to any number of external coating systems, and then inform an external coating system that a calibration event is to be performed using the provided sample. The system can instruct the external coating system to submit attributes of an applied sample of the test coating (e.g., the "first" coating mentioned earlier), and it should preferably be the case that the test coating matches or aligns with the standard coating. If that is not the case, then the external coating system is not calibrated relative to the calibrated facility where the standard coating was analyzed. **In** this regard, the test coating can be considered as a "control factor" and can be analyzed to determine whether the test coating actually does align with the standard coating.

The first digital measurement is received from a first coating system. For instance, the test coating 630 from Figure 6 can be representative of the first coating. The process of receiving the first digital measurement further can include receiving environmental condition data for an environment in which the first coating system is located or applied.

**In** parallel or in serial with act 1005, there is an act 1010 of receiving a second digital measurement of a second coating that was previously applied to a second asset (e.g., a vehicle, calibration board or surface, etc.) at a second coating system. The second coating should also supposedly match with the standard coating because the second coating is another sample of the standard coating. The second digital measurement is received from a second coating system, which is different from the first coating system. The test coating 650 can be representative of the second coating. The first, second, and standard coating all originate from the same coating source such that their coating attributes are all the same prior to application onto an asset. Those attributes may change, however, after those coatings are applied to an asset (e.g., because of differences between conditions in the different facilities).

The process of receiving the second digital measurement can further include receiving environment condition data for an environment in which the second coating system is located or applied. Beneficially, the disclosed systems are able to perform calibration events for multiple external coating systems at the same time, such that multiple calibration events are executed in parallel. Although only two such calibration or comparison events are described above, one will appreciate how more than two events can be executed concurrently with one another.

The method then describes various acts in which information is displayed within a user interface. For instance, act 1015 involves displaying a first rendering representative of the first coating (along with the first digital measurement of the first coating) in the user interface. With reference to Figure 7, the coating rendering 715 can be representative of the first rendering that is displaying the first coating. The user interface 700 also displays digital measurements or rather coating attributes 720 for that coating. In some cases, the first rendering includes a first three-dimensional rendering in which the first coating is applied to a first curved surface.

Act 1020 involves displaying a second rendering representative of the second coating (along with the second digital measurement of the second coating) in the user interface. In Figure 7, the coating rendering 725 is representative of the second rendering that displays the second coating. Digital measurements, or rather coating attributes 730, for this coating are also displayed in the user interface 700. Similarly, the second rendering can include a second three-dimensional rendering in which the second coating is applied to a second curved surface.

Act 1025 includes displaying a third rendering representative of the standard coating in the user interface. For instance, the standard coating rendering 705 is representative of the third rendering. Optionally, the third rendering can include a third three-dimensional rendering in which the standard coating is applied to a third curved surface. **In** some cases, the first curved surface mentioned earlier is included as a part of a first vehicle of a particular type, the second curved surface is included as a part of a second vehicle of the same particular type, and the third curved surface is included as a part of a third vehicle of the same particular type. **In** some cases, different vehicle makes and models can be used while in other cases the same make and model is used.

**In** Figure 10, there is also an act (act 1030) of displaying a first match status between the first and standard coatings. The match status is based on a comparison between coating attributes of the first and standard coatings. The match status 830 in Figure 8 can be representative of this act. The match status represents whether or not a test coating aligns with the standard coating. Such alignment also reflects whether the conditions at the external coating system are calibrated relative to the conditions at the calibrated facility.

Act 1035 includes displaying a second match status between the second coating and the standard coating. The second match status is based on a comparison between coating attributes of the second coating and the coating attributes of the standard coating. The match status 835 in Figure 8 can be representative of this act. In some cases, the process of determining the match statuses includes determining whether one or more differences between the coating attributes of the test coating(s) and the coating attributes of the standard coating are within a defined difference threshold.

### Example Computer Systems

In this regard, the disclosed systems are beneficially able to provide unique user interfaces and operations designed to improve the coating comparison and calibration processes. To do so, the systems rely on computer systems that are configured in specific ways so as to achieve these benefits.

Returning to Figure 4, this figure illustrates an example computer system 400 that may include and/or be used to perform any of the components or operations described herein. Computer system 400 may take various different forms. For example, computer system 400 may be embodied as a tablet, a desktop, a laptop, a mobile device, or a standalone device. Computer system 400 may also be a distributed system that includes one or more connected computing components/devices that are in communication with computer system 400.

In its most basic configuration, computer system 400 includes various different components. Figure 4 shows that computer system 400 includes one or more processor(s) (e.g., 415A, 415B, 415C) (aka a "hardware processing unit") and storage 420.

Regarding the processor(s), it will be appreciated that the functionality described herein can be performed, at least in part, by one or more hardware logic components (e.g., the processor(s) 415A, 415B, or 415C). For example, and without limitation, illustrative types of hardware logic components/processors that can be used include Field-Programmable Gate Arrays ("FPGA"), Program-Specific or Application-Specific Integrated Circuits ("ASIC"), Program-Specific Standard Products ("ASSP"), System-On-A-Chip Systems ("SOC"), Complex Programmable Logic Devices ("CPLD"), Central Processing Units ("CPU"), Graphical Processing Units ("GPU"), or any other type of programmable hardware.

References to an "engine" (e.g., ML engine 430) may be implemented as a specific processing unit (e.g., a dedicated processing unit as described earlier) configured to perform one or more specialized operations for the computer system 400. As used herein, the terms "executable module," "executable component," "component," "module," or "engine" can refer to hardware processing units or to software objects, routines, or methods that may be executed on computer system 400. The different components, modules, engines, and services described herein may be implemented as objects or processors that execute on computer system 400 (e.g. as separate threads).

Storage 420 may be physical system memory, which may be volatile, non-volatile, or some combination of the two. The term "memory" may also be used herein to refer to non-volatile mass storage such as physical storage media. If computer system 400 is distributed, the processing, memory, and/or storage capability may be distributed as well.

Storage 420 is shown as including executable instructions 425. The executable instructions 425 represent instructions that are executable by the processor(s) (or perhaps even the ML engine 430) of computer system 400 to perform the disclosed operations, such as those described in the various methods.

The disclosed embodiments may comprise or utilize a special-purpose or general-purpose computer including computer hardware, such as, for example, one or more processors and system memory (such as storage 420), as discussed in greater detail below. Embodiments also include physical and other computer-readable media for carrying or storing computer-executable instructions and/or data structures. Such computer-readable media can be any available media that can be accessed by a general-purpose or special-purpose computer system. Computer-readable media that store computer-executable instructions in the form of data are "physical computer storage media" or a "hardware storage device." Computer-readable media that carry computer-executable instructions are "transmission media." Thus, by way of example and not limitation, the current embodiments can comprise at least two distinctly different kinds of computer-readable media: computer storage media and transmission media.

Computer storage media (aka "hardware storage device") are computer-readable hardware storage devices, such as RAM, ROM, EEPROM, CD-ROM, solid state drives ("SSD") that are based on RAM, Flash memory, phase-change memory ("PCM"), or other types of memory, or other optical disk storage, magnetic disk storage or other magnetic storage devices, or any other medium that can be used to store desired program code means in the form of computer-executable instructions, data, or data structures and that can be accessed by a general-purpose or special-purpose computer.

Computer system 400 may also be connected (via a wired or wireless connection) to external sensors (e.g., one or more remote cameras) or devices via a network 435. For example, computer system 400 can communicate with any number devices (e.g., spectrophotometer 405) or cloud services to obtain or process data. In some cases, network 435 may itself be a cloud network. Furthermore, computer system 400 may also be connected through one or more wired or wireless networks 435 to remote/separate computer systems(s) that are configured to perform any of the processing described with regard to computer system 400.

A "network," like network 435, is defined as one or more data links and/or data switches that enable the transport of electronic data between computer systems, modules, and/or other electronic devices. When information is transferred, or provided, over a network (either hardwired, wireless, or a combination of hardwired and wireless) to a computer, the computer properly views the connection as a transmission medium. Computer system 400 will include one or more communication channels that are used to communicate with the network 435. Transmissions media include a network that can be used to carry data or desired program code means in the form of computer-executable instructions or in the form of data structures. Further, these computer-executable instructions can be accessed by a general-purpose or special-purpose computer. Combinations of the above should also be included within the scope of computer-readable media.

Upon reaching various computer system components, program code means in the form of computer-executable instructions or data structures can be transferred automatically from transmission media to computer storage media (or vice versa). For example, computer-executable instructions or data structures received over a network or data link can be buffered in RAM within a network interface module (e.g., a network interface card or "NIC") and then eventually transferred to computer system RAM and/or to less volatile computer storage media at a computer system. Thus, it should be understood that computer storage media can be included in computer system components that also (or even primarily) utilize transmission media.

Computer-executable (or computer-interpretable) instructions comprise, for example, instructions that cause a general-purpose computer, special-purpose computer, or special-purpose processing device to perform a certain function or group of functions. The computer-executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the embodiments may be practiced in network computing environments with many types of computer system configurations, including personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, and the like. The embodiments may also be practiced in distributed system environments where local and remote computer systems that are linked (either by hardwired data links, wireless data links, or by a combination of hardwired and wireless data links) through a network each perform tasks (e.g. cloud computing, cloud services and the like). In a distributed system environment, program modules may be located in both local and remote memory storage devices.

In view of the foregoing, the present invention relates, for example and without being limited thereto, to the following aspects:
In a first aspect, a computer-implemented method, particularly according to any one of method fourteen through twenty, for comparing a test coating against a standard coating can include selecting a standard coating to operate as a standard for comparison with a test coating to determine whether the test coating sufficiently matches the standard coating; determining coating attributes of the test coating, wherein the coating attributes of the test coating are based on received digital measurements of the test coating, wherein the test coating was previously applied to an asset, and wherein the digital measurement is received from a remotely-located coating system; determining coating attributes of the standard coating; within a user interface, displaying (1) a rendering representative of the test coating and (ii) a rendering representative of the standard coating; performing a comparison between the coating attributes of the test coating and the coating attributes of the standard coating; determining whether one or more differences between the coating attributes of the test coating and the coating attributes of the standard coating are within a defined difference threshold ; and based on said comparison and based on the defined difference threshold, displaying a match status between the test coating and the standard coating.

In a second aspect of the computer-implemented method as recited in aspect one, the method can further include generating a notification indicating a set of calibration parameters that, if implemented, modify conditions at the remotely-located coating system to cause a subsequent application of the test coating to more closely align with the standard coating.

In a third aspect of the computer-implemented method as recited in any of the preceding aspects one through two, the test coating can be a sample of the standard coating such that both the test coating and the standard coating originate from a same source, particularly the coating composition used for the standard and test coating originate from the same source or batch.

In a fourth aspect, a computer system can be configured to compare multiple different test coatings against a standard coating, particularly using a method as recited in any one of method aspect one through twenty-seven, where the multiple different test coatings are applied at multiple different coating systems, the computer system can include one or more processors; and one or more computer-readable hardware storage devices that store instructions that are executable by the one or more processors to cause the computer system to at least receive a first digital measurement of a first coating that was previously applied to a first asset at a first coating system; receive a second digital measurement of a second coating that was previously applied to a second asset at a second coating system, which is different from the first coating system; within a user interface, display: a first rendering representative of the first coating and the first digital measurement of the first coating; a second rendering representative of the second coating and the second digital measurement of the second coating; a third rendering representative of the standard coating; display a first match status between the first coating and the standard coating, wherein the match status is based on a comparison between coating attributes of the first coating and coating attributes of the standard coating; and display a second match status between the second coating and the standard coating, wherein the second match status is based on a comparison between coating attributes of the second coating and the coating attributes of the standard coating.

In a fifth aspect of the computer system as recited in aspect four, the first rendering can include a first three-dimensional rendering in which the first coating is applied to a first curved surface.

In a sixth aspect of the computer system as recited in preceding aspects four through five, the second rendering can include a second three-dimensional rendering in which the second coating is applied to a second curved surface.

In a seventh aspect of the computer system as recited in preceding aspects four through six, the third rendering can include a third three-dimensional rendering in which the standard coating is applied to a third curved surface.

In an eighth aspect of the computer system as recited in any of the preceding aspects four through seven, the first coating can be a sample of the standard coating such that the first coating and the standard coating originate from a same source, and wherein the second coating is another sample of the standard coating such that the first coating, the second coating, and the standard coating all originate from the same source, particularly the coating composition used for the standard coating as well as the first and second coating originate from the same source or batch.

In a ninth aspect of the computer system in any of the preceding aspects four through eight, the first match status can include a mathematical representation of a mathematical difference between the coating attributes of the first coating and the coating attributes of the standard coating.

In a tenth aspect of the computer system in any of the preceding aspects four through nine, the second match status can include a difference in CIELab color space values between the first coating and the standard coating.

In an eleventh aspect of the computer system in any of the preceding aspects four through ten, the user interface can further display a calibration parameter that is applicable to modify one or more conditions at the first coating system to more closely align subsequent applications of the first coating at the first coating system with the standard coating.

In a twelfth aspect of the computer system in any of the preceding aspects four through eleven, execution of the instructions can further cause the computer system to determine whether one or more differences between the coating attributes of the first coating and the coating attributes of the standard coating are within a defined difference threshold; and upon determining that the one or more differences are within the defined difference threshold, cause the first match status to indicate that the first coating sufficiently matches the standard coating.

In a thirteenth aspect of the computer system in any of the preceding aspects four through twelve, the first rendering, the second rendering, and the third rendering can be displayed proximately with one another.

In a fourteenth aspect, another or additional configuration of a computer-implemented method, particularly using a computer system as recited in any one of aspects four through thirteen, for visually displaying multiple different test coatings on a user interface to facilitate comparison against a standard coating, where the multiple different test coatings are received from multiple different coating systems, can include receiving a first digital measurement of a first coating that was previously applied to a first asset at a first coating system; receiving a second digital measurement of a second coating that was previously applied to a second asset at a second coating system; within a user interface, displaying: a first rendering representative of the first coating and the first digital measurement of the first coating; a second rendering representative of the second coating and the second digital measurement of the second coating; a third rendering representative of the standard coating; displaying a first match status between the first coating and the standard coating, wherein the match status is based on a comparison between coating attributes of the first coating and coating attributes of the standard coating; and displaying a second match status between the second coating and the standard coating, wherein the second match status is based on a comparison between coating attributes of the second coating and the coating attributes of the standard coating.

In a fifteenth aspect of the computer-implemented method as recited in aspect fourteen, the coating attributes of the standard coating can be retained in a database of coatings.

In a sixteenth aspect of the computer-implemented method as recited in any of aspects fourteen through fifteen, the method can further include determining whether one or more differences between the coating attributes of the first coating and the coating attributes of the standard coating are within a defined difference threshold.

In a seventeenth aspect of the computer-implemented method as recited in any of aspects fourteen through sixteen, receiving the first digital measurement can further include receiving environmental condition data for an environment in which the first coating system is located or where the first coating was applied.

In an eighteenth aspect of the computer-implemented method as recited in any of aspects fourteen through seventeen, receiving the second digital measurement can further include receiving environment condition data for an environment in which the second coating system is located or where the second coating was applied.

In a nineteenth aspect of the computer-implemented method as recited in any of aspects fourteen through eighteen, the first rendering can include a three-dimensional (3D) rendition of a vehicle that is coated with the first coating.

In a twentieth aspect of the computer-implemented method as recited in any of aspects fourteen through nineteen, the first coating, the second coating, and the standard coating can originate from a same coating source, particularly the coating composition used for the standard coating as well as the first and second coating originate from the same source or batch.

In a twenty-first aspect of a method or computer system as recited in any one of aspects one through twenty, wherein each digital measurement can comprise spectrometric data, particularly spectrophotometric data, data acquired via image processing, and/or spectrocolorimetric data, of the respective coating.

In a twenty-second aspect of a method or computer system as recited in any one of aspects one through twenty-one, wherein each coating attribute, particularly each test coating attribute, can be determined using spectrometric data, particularly spectrophotometric data, data acquired via image processing, and/or spectrocolorimetric data of the respective coating.

In a twenty-third aspect of a method or computer system as recited in any one of aspects one through twenty-two, wherein the coating attributes of standard coating can be determined using spectrometric data from a coating system that is different from the remotely-located coating systems for the test coating(s).

In a twenty-fourth aspect of a method or computer system as recited in any one of aspects one through twenty-three, wherein the coating attributes can include a set of colorants and can associate with each colorant a probability that a particular colorant is present.

In a twenty-fifth aspect of a method or computer system as recited in any one of aspects one through twenty-four, wherein each coating attribute can comprise environmental data, particularly temperature, humidity, and/or elevation, present during the application of the respective coating.

In a twenty-sixth aspect of a method or computer system as recited in any one of aspects one through twenty-five, wherein each coating attribute can comprise environmental conditions, particularly equipment, such as coating equipment, tools, techniques, environmental data, and/or the asset.

In a twenty-seventh aspect of a method or computer system as recited in any one of aspects one through twenty-six, wherein each match status can include a difference in CIELab color space values between the respective coating and the standard coating.

The present invention may be embodied in other specific forms without departing from its characteristics. The described embodiments are to be considered in all respects only as illustrative and not restrictive. The scope of the invention is, therefore, indicated by the appended claims.

## Claims

1. A method (500) for comparing a test coating (410, 630) against a standard coating (610), said method comprising:
selecting (505) a standard coating (610) to operate as a standard for comparison with a test coating (410, 630) to determine whether the test coating (410, 630) sufficiently matches the standard coating (610);
determining (510) coating attributes (710, 720, 730) of the test coating (410, 630), wherein the coating attributes (710, 720, 730) of the test coating (410, 630) are based on received digital measurements of the test coating (410, 630), wherein the test coating (410, 630) was previously applied to an asset, and wherein the digital measurement is received from a remotely-located coating system;
determining (515) coating attributes (710, 720, 730) of the standard coating (610);
within a user interface (700, 800, 900), displaying (1) (520) a rendering representative of the test coating (410, 630) and (ii) a rendering representative of the standard coating (610);
performing (525) a comparison between the coating attributes (710, 720, 730) of the test coating (410, 630) and the coating attributes (710, 720, 730) of the standard coating (610);
determining (530) whether one or more differences between the coating attributes (710, 720, 730) of the test coating (410, 630) and the coating attributes (710, 720, 730) of the standard coating (610) are within a defined difference threshold; and
based on said comparison and based on the defined difference threshold, displaying (535) a match status (685) between the test coating (410, 630) and the standard coating (610), wherein the test coating (410, 630) is a sample of the standard coating (610) such that both the test coating (410, 630) and the standard coating (610) are the same before application onto an asset.

2. The method (500) of claim 1, further comprising generating a notification indicating a set of calibration parameters (680) that, if implemented, modify conditions at the remotely-located coating system to cause a subsequent application of the test coating (410, 630) to more closely align with the standard coating (610).

3. A computer system (400) configured to compare multiple different test coatings (410, 630) against a standard coating (610), where the multiple different test coatings (410, 630) are applied at multiple different coating systems, said computer system (400) comprising:
one or more processors (415); and
one or more computer-readable hardware storage devices (420) that store instructions (425) that are executable by the one or more processors (415) to cause the computer system (400) to at least:
receive (1005) a first digital measurement of a first coating that was previously applied to a first asset at a first coating system;
receive (1010) a second digital measurement of a second coating that was previously applied to a second asset at a second coating system, which is different from the first coating system;
within a user interface (700, 800, 900), display:
a first rendering representative (1015) of the first coating and the first digital measurement of the first coating;
a second rendering representative (1020) of the second coating and the second digital measurement of the second coating;
a third rendering representative (1025) of the standard coating (610);
display (1030) a first match status (685) between the first coating and the standard coating (610), wherein the match status (685) is based on a comparison between coating attributes (710, 720, 730) of the first coating and coating attributes (710, 720, 730) of the standard coating (610); and
display (1035) a second match status (685) between the second coating and the standard coating (610), wherein the second match status (685) is based on a comparison between coating attributes (710, 720, 730) of the second coating and the coating attributes (710, 720, 730) of the standard coating (610), wherein the first coating is a sample of the standard coating (610) such that the first coating and the standard coating (610) are the same before application onto an asset, and wherein the second coating is another sample of the standard coating (610) such that the first coating, the second coating, and the standard coating (610) are the same before application onto an asset.

4. The computer system (400) of claim 3, wherein the first rendering includes a first three-dimensional rendering in which the first coating is applied to a first curved surface, and/or wherein the second rendering includes a second three-dimensional rendering in which the second coating is applied to a second curved surface.

5. The computer system (400) of any of the preceding claims 3 through 4, wherein the third rendering includes a third three-dimensional rendering in which the standard coating (610) is applied to a third curved surface.

6. The computer system (400) of any of the preceding claims 3 through 5, wherein the first match status (685) includes a mathematical representation of a mathematical difference between the coating attributes (710, 720, 730) of the first coating and the coating attributes (710, 720, 730) of the standard coating (610).

7. The computer system (400) of any of the preceding claims 3 through 6, wherein the second match status (685) includes a difference in CIELab color space values between the first coating and the standard coating (610).

8. The computer system (400) of any of the preceding claims 3 through 7, wherein the user interface (700, 800, 900) further displays a calibration parameter (680) that is applicable to modify one or more conditions at the first coating system to more closely align subsequent applications of the first coating at the first coating system with the standard coating (610).

9. The computer system (400) of any of the preceding claims 3 through 8, wherein execution of the instructions (425) further causes the computer system (400) to:
determine whether one or more differences between the coating attributes (710, 720, 730) of the first coating and the coating attributes (710, 720, 730) of the standard coating (610) are within a defined difference threshold; and
upon determining that the one or more differences are within the defined difference threshold, cause the first match status (685) to indicate that the first coating sufficiently matches the standard coating (610).

10. The computer system (400) of any of the preceding claims 3 through 9, wherein the first rendering, the second rendering, and the third rendering are displayed proximately with one another.

11. A method for visually displaying multiple different test coatings (410, 630) on a user interface (700, 800, 900) to facilitate comparison against a standard coating (610), where the multiple different test coatings (410, 630) are received from multiple different coating systems (625, 645), said method comprising:
receiving a first digital measurement of a first coating that was previously applied to a first asset at a first coating system (625);
receiving a second digital measurement of a second coating that was previously applied to a second asset at a second coating system (645);
within a user interface (700, 800, 900), displaying:
a first rendering representative of the first coating and the first digital measurement of the first coating;
a second rendering representative of the second coating and the second digital measurement of the second coating;
a third rendering representative of the standard coating (610);
displaying a first match status (685) between the first coating and the standard coating (610), wherein the match status (685) is based on a comparison between coating attributes (710, 720, 730) of the first coating and coating attributes (710, 720, 730) of the standard coating (610); and
displaying a second match status (685) between the second coating and the standard coating (610), wherein the second match status (685) is based on a comparison between coating attributes (710, 720, 730) of the second coating and the coating attributes (710, 720, 730) of the standard coating (610), wherein the first coating, the second coating, and the standard coating (610) are the same before application onto an asset.

12. The method of claim 11, wherein the coating attributes (710, 720, 730) of the standard coating (610) are retained in a database of coatings.

13. The method of any of the preceding claims 11 through 12, wherein the method further includes:
determining whether one or more differences between the coating attributes (710, 720, 730) of the first coating and the coating attributes (710, 720, 730) of the standard coating (610) are within a defined difference threshold.

14. The method of any of the preceding claims 11 through 13, wherein receiving the first digital measurement further includes receiving environmental condition data for an environment in which the first coating system (625) is located or where the first coating was applied, and/or wherein receiving the second digital measurement further includes receiving environment condition data for an environment in which the second coating system (645) is located or where the second coating was applied.

15. The method of any of the preceding claims 11 through 14, wherein the first rendering includes a three-dimensional (3D) rendition of a vehicle that is coated with the first coating.

## Patentansprüche

1. Ein Verfahren (500) zum Vergleich einer Testbeschichtung (410, 630) mit einer Standardbeschichtung (610), wobei das Verfahren umfasst:
Auswählen (505) einer Standardbeschichtung (610), die als Referenz für den Vergleich mit einer Testbeschichtung (410, 630) dient, um festzustellen, ob die Testbeschichtung (410, 630) ausreichend mit der Standardbeschichtung (610) übereinstimmt,
Ermitteln (510) von Beschichtungsattributen (710, 720, 730) der Testbeschichtung (410, 630), wobei die Beschichtungsattribute (710, 720, 730) der Testbeschichtung (410, 630) auf empfangenen digitalen Messungen der Testbeschichtung (410, 630) basieren, wobei die Testbeschichtung (410, 630) zuvor auf ein Objekt aufgebracht wurde und wobei die digitale Messung von einem räumlich entfernt gelegenen Beschichtungssystem empfangen wird,
Ermitteln (515) von Beschichtungsattributen (710, 720, 730) der Standardbeschichtung (610),
innerhalb einer Benutzeroberfläche (700, 800, 900), Anzeigen (1) (520) einer Darstellung, die die Testbeschichtung (410, 630) repräsentiert, und (ii) einer Darstellung, die die Standardbeschichtung (610) repräsentiert,
Durchführen (525) eines Vergleichs zwischen den Beschichtungsattributen (710, 720, 730) der Testbeschichtung (410, 630) und den Beschichtungsattributen (710, 720, 730) der Standardbeschichtung (610),
Ermitteln (530), ob eine oder mehrere Abweichungen zwischen den Beschichtungsattributen (710, 720, 730) der Testbeschichtung (410, 630) und den Beschichtungsattributen (710, 720, 730) der Standardbeschichtung (610) innerhalb einer definierten Abweichungsgrenze liegen, und
auf der Grundlage des genannten Vergleichs und auf der Grundlage der definierten Abweichungsgrenze, Anzeigen (535) eines Übereinstimmungsstatus (685) zwischen der Testbeschichtung (410, 630) und der Standardbeschichtung (610), wobei die Testbeschichtung (410, 630) eine Probe der Standardbeschichtung (610) ist, sodass die Testbeschichtung (410, 630) und die Standardbeschichtung (610) die gleichen sind, bevor sie auf das Objekt aufgetragen werden.

2. Das Verfahren (500) nach Anspruch 1, ferner umfassend Erzeugen einer Benachrichtigung, die einen Satz von Kalibrierungsparametern (680) angibt, die, wenn sie umgesetzt werden, die Bedingungen an dem räumlich entfernt gelegenen Beschichtungssystem so ändern, dass eine nachfolgende Auftragung der Testbeschichtung (410, 630) genauer an die Standardbeschichtung (610) angepasst wird.

3. Ein Computersystem (400), das so konfiguriert ist, dass es mehrere verschiedene Testbeschichtungen (410, 630) mit einer Standardbeschichtung (610) vergleicht, wobei die mehreren verschiedenen Testbeschichtungen (410, 630) an mehreren verschiedenen Beschichtungssystemen aufgebracht werden, wobei das Computersystem (400) umfasst:
einen oder mehrere Prozessoren (415), und
ein oder mehrere computerlesbare Hardware-Speichergeräte (420), die Befehle (425) speichern, die von dem einen oder den mehreren Prozessoren (415) ausgeführt werden können, um das Computersystem (400) dazu zu veranlassen, zumindest:
eine erste digitale Messung einer ersten Beschichtung, die zuvor an einem ersten Objekt in einem ersten Beschichtungssystem aufgebracht wurde, zu empfangen (1005),
eine zweite digitale Messung einer zweiten Beschichtung, die zuvor an einem zweiten Objekt in einem zweiten Beschichtungssystem, das sich vom ersten Beschichtungssystem unterscheidet, aufgebracht wurde, zu empfangen (1010),
innerhalb einer Benutzeroberfläche (700, 800, 900) Folgendes anzuzeigen:
eine erste Darstellung (1015), die die erste Beschichtung und die erste digitale Messung der ersten Beschichtung repräsentiert,
eine zweite Darstellung (1020), die die zweite Beschichtung und die zweite digitale Messung der zweiten Beschichtung repräsentiert,
eine dritte Darstellung (1025), die die Standardbeschichtung (610) repräsentiert;
einen ersten Übereinstimmungsstatus (685) zwischen der ersten Beschichtung und der Standardbeschichtung (610) anzuzeigen (1030), wobei der Übereinstimmungsstatus (685) auf einem Vergleich zwischen Beschichtungsattributen (710, 720, 730) der ersten Beschichtung und Beschichtungsattributen (710, 720, 730) der Standardbeschichtung (610) basiert, und
einen zweiten Übereinstimmungsstatus (685) zwischen der zweiten Beschichtung und der Standardbeschichtung (610) anzuzeigen (1035), wobei der zweite Übereinstimmungsstatus (685) auf einem Vergleich zwischen Beschichtungsattributen (710, 720, 730) der zweiten Beschichtung und den Beschichtungsattributen (710, 720, 730) der Standardbeschichtung (610) basiert, wobei die erste Beschichtung eine Probe der Standardbeschichtung (610) ist, sodass die Testbeschichtung (410, 630) und die Standardbeschichtung (610) die gleichen sind, bevor sie auf das Objekt aufgetragen werden, und wobei die zweite Beschichtung eine weitere Probe der Standardbeschichtung (610) ist, sodass die erste Beschichtung, die zweite Beschichtung und die Standardbeschichtung (610) die gleichen sind, bevor sie auf das Objekt aufgetragen werden.

4. Das Computersystem (400) nach Anspruch 3, wobei die erste Darstellung eine erste dreidimensionale Darstellung umfasst, in der die erste Beschichtung auf eine erste gekrümmte Oberfläche aufgebracht ist, und/oder wobei die zweite Darstellung eine zweite dreidimensionale Darstellung umfasst, in der die zweite Beschichtung auf eine zweite gekrümmte Oberfläche aufgebracht ist.

5. Das Computersystem (400) nach irgendeinem der vorstehenden Ansprüche 3 bis 4, wobei die dritte Darstellung eine dritte dreidimensionale Darstellung umfasst, in der die Standardbeschichtung (610) auf eine dritte gekrümmte Oberfläche aufgebracht ist.

6. Das Computersystem (400) nach irgendeinem der vorstehenden Ansprüche 3 bis 5, wobei der erste Übereinstimmungsstatus (685) eine mathematische Darstellung einer mathematischen Differenz zwischen den Beschichtungsattributen (710, 720, 730) der ersten Beschichtung und den Beschichtungsattributen (710, 720, 730) der Standardbeschichtung (610) umfasst.

7. Das Computersystem (400) nach irgendeinem der vorstehenden Ansprüche 3 bis 6, wobei der zweite Übereinstimmungsstatus (685) eine Differenz der CIELab-Farbraumwerte zwischen der ersten Beschichtung und der Standardbeschichtung (610) umfasst.

8. Das Computersystem (400) nach irgendeinem der vorstehenden Ansprüche 3 bis 7, wobei die Benutzeroberfläche (700, 800, 900) ferner einen Kalibrierungsparameter (680) anzeigt, der dazu dient, eine oder mehrere Bedingungen am ersten Beschichtungssystem so zu ändern, dass nachfolgende Aufträge der ersten Beschichtung am ersten Beschichtungssystem genauer an die Standardbeschichtung (610) angepasst werden.

9. Das Computersystem (400) nach irgendeinem der vorstehenden Ansprüche 3 bis 8, wobei die Ausführung der Befehle (425) das Computersystem (400) ferner veranlasst:
zu ermitteln, ob eine oder mehrere Abweichungen zwischen den Beschichtungsattributen (710, 720, 730) der ersten Beschichtung und den Beschichtungsattributen (710, 720, 730) der Standardbeschichtung (610) innerhalb einer definierten Abweichungsgrenze liegen, und
nach Feststellung, dass der eine oder die mehreren Unterschiede innerhalb der definierten Abweichungsgrenze liegen, zu bewirken, dass der erste Übereinstimmungsstatus (685) anzeigt, dass die erste Beschichtung ausreichend mit der Standardbeschichtung (610) übereinstimmt.

10. Das Computersystem (400) nach irgendeinem der vorstehenden Ansprüche 3 bis 9, wobei die erste Darstellung, die zweite Darstellung und die dritte Darstellung nahe beieinander angezeigt werden.

11. Verfahren zum visuellen Anzeigen mehrerer verschiedener Testbeschichtungen (410, 630) auf einer Benutzeroberfläche (700, 800, 900), um den Vergleich mit einer Standardbeschichtung (610) zu erleichtern, wobei die mehreren verschiedenen Testbeschichtungen (410, 630) von mehreren verschiedenen Beschichtungssystemen (625, 645) empfangen werden, wobei das Verfahren umfasst:
Empfangen einer ersten digitalen Messung einer ersten Beschichtung, die zuvor an einem ersten Objekt in einem ersten Beschichtungssystem (625) aufgebracht wurde,
Empfangen einer zweiten digitalen Messung einer zweiten Beschichtung, die zuvor an einem zweiten Objekt in einem zweiten Beschichtungssystem (645) aufgebracht wurde,
Anzeigen innerhalb einer Benutzeroberfläche (700, 800, 900) von:
einer ersten Darstellung, die die erste Beschichtung und die erste digitale Messung der ersten Beschichtung repräsentiert,
einer zweiten Darstellung, die die zweite Beschichtung und die zweite digitale Messung der zweiten Beschichtung repräsentiert,
einer dritten Darstellung, die die Standardbeschichtung (610) repräsentiert, Anzeigen eines ersten Übereinstimmungsstatus (685) zwischen der ersten Beschichtung und der Standardbeschichtung (610), wobei der Übereinstimmungsstatus (685) auf einem Vergleich zwischen Beschichtungsattributen (710, 720, 730) der ersten Beschichtung und Beschichtungsattributen (710, 720, 730) der Standardbeschichtung (610) basiert, und
Anzeigen eines zweiten Übereinstimmungsstatus (685) zwischen der zweiten Beschichtung und der Standardbeschichtung (610), wobei der zweite Übereinstimmungsstatus (685) auf einem Vergleich zwischen Beschichtungsattributen (710, 720, 730) der zweiten Beschichtung und den Beschichtungsattributen (710, 720, 730) der Standardbeschichtung (610) basiert, wobei die erste Beschichtung, die zweite Beschichtung und die Standardbeschichtung (610) die gleichen sind, bevor sie auf ein Objekt aufgetragen werden.

12. Das Verfahren nach Anspruch 11, wobei die Beschichtungsattribute (710, 720, 730) der Standardbeschichtung (610) in einer Beschichtungsdatenbank gespeichert werden.

13. Das Verfahren nach irgendeinem der vorstehenden Ansprüche 11 bis 12, wobei das Verfahren ferner umfasst:
Ermitteln, ob eine oder mehrere Abweichungen zwischen den Beschichtungsattributen (710, 720, 730) der ersten Beschichtung und den Beschichtungsattributen (710, 720, 730) der Standardbeschichtung (610) innerhalb einer definierten Abweichungsgrenze liegen.

14. Das Verfahren nach irgendeinem der vorstehenden Ansprüche 11 bis 13, wobei das Empfangen der ersten digitalen Messung ferner das Empfangen von Umgebungszustandsdaten für eine Umgebung umfasst, in der sich das erste Beschichtungssystem (625) befindet oder in der die erste Beschichtung aufgebracht wurde, und/oder wobei das Empfangen der zweiten digitalen Messung ferner das Empfangen von Umgebungszustandsdaten für eine Umgebung umfasst, in der sich das zweite Beschichtungssystem (645) befindet oder in der die zweite Beschichtung aufgebracht wurde.

15. Das Verfahren nach irgendeinem der vorstehenden Ansprüche 11 bis 14, wobei die erste Darstellung eine dreidimensionale (3D) Darstellung eines Fahrzeugs umfasst, das mit der ersten Beschichtung beschichtet ist.

## Revendications

1. Procédé (500) de comparaison d'un revêtement d'essai (410, 630) à un revêtement standard (610), ledit procédé comprenant :
la sélection (505) d'un revêtement standard (610) destiné à servir d'étalon à des fins de comparaison avec un revêtement d'essai (410, 630) pour déterminer si le revêtement d'essai (410, 630) correspond suffisamment au revêtement standard (610) ;
la détermination (510) d'attributs de revêtement (710, 720, 730) du revêtement d'essai (410, 630), dans lequel les attributs de revêtement (710, 720, 730) du revêtement d'essai (410, 630) sont basés sur des mesures numériques reçues du revêtement d'essai (410, 630), dans lequel le revêtement d'essai (410, 630) a été précédemment appliqué sur un actif, et dans lequel la mesure numérique est reçue d'un système de revêtement situé à distance ;
la détermination (515) d'attributs de revêtement (710, 720, 730) du revêtement standard (610) ;
au sein d'une interface utilisateur (700, 800, 900), l'affichage (1) (520) d'un rendu représentatif du revêtement d'essai (410, 630) et (ii) d'un rendu représentatif du revêtement standard (610) ;
la réalisation (525) d'une comparaison entre les attributs de revêtement (710, 720, 730) du revêtement d'essai (410, 630) et les attributs de revêtement (710, 720, 730) du revêtement standard (610) ;
la détermination (530) si une ou plusieurs différences entre les attributs de revêtement (710, 720, 730) du revêtement d'essai (410, 630) et les attributs de revêtement (710, 720, 730) du revêtement standard (610) se trouvent dans un seuil de différence défini ; et
sur la base de ladite comparaison et sur la base du seuil de différence défini, l'affichage (535) d'un état de correspondance (685) entre le revêtement d'essai (410, 630) et le revêtement standard (610), dans lequel le revêtement d'essai (410, 630) est un échantillon du revêtement standard (610) de sorte que le revêtement d'essai (410, 630) et le revêtement standard (610) soient tous deux identiques avant leur application sur un actif.

2. Procédé (500) selon la revendication 1, comprenant en outre la génération d'une notification indiquant un ensemble de paramètres d'étalonnage (680) qui, s'ils sont mis en œuvre, modifient les conditions au niveau du système de revêtement situé à distance pour amener une application ultérieure du revêtement d'essai (410, 630) à s'aligner plus étroitement avec le revêtement standard (610).

3. Système informatique (400) configuré pour comparer de multiples revêtements d'essai (410, 630) différents à un revêtement standard (610), dans lequel les multiples revêtements d'essai (410, 630) différents sont appliqués sur de multiples systèmes de revêtement différents, ledit système informatique (400) comprenant :
un ou plusieurs processeurs (415) ; et
un ou plusieurs dispositifs de stockage matériel lisibles par ordinateur (420) qui stockent des instructions (425) qui sont exécutables par les un ou plusieurs processeurs (415) pour amener le système informatique (400) à au moins :
recevoir (1005) une première mesure numérique d'un premier revêtement qui a été précédemment appliqué sur un premier actif au niveau d'un premier système de revêtement ;
recevoir (1010) une deuxième mesure numérique d'un deuxième revêtement qui a été précédemment appliqué sur un deuxième actif au niveau d'un deuxième système de revêtement, qui est différent du premier système de revêtement ;
au sein d'une interface utilisateur (700, 800, 900), afficher :
un premier rendu représentatif (1015) du premier revêtement et la première mesure numérique du premier revêtement ;
un deuxième rendu représentatif (1020) du deuxième revêtement et la deuxième mesure numérique du deuxième revêtement ;
un troisième rendu représentatif (1025) du revêtement standard (610) ;
afficher (1030) un premier état de correspondance (685) entre le premier revêtement et le revêtement standard (610), dans lequel l'état de correspondance (685) est basé sur une comparaison entre des attributs de revêtement (710, 720, 730) du premier revêtement et des attributs de revêtement (710, 720, 730) du revêtement standard (610) ; et
afficher (1035) un deuxième état de correspondance (685) entre le deuxième revêtement et le revêtement standard (610), dans lequel le deuxième état de correspondance (685) est basé sur une comparaison entre des attributs de revêtement (710, 720, 730) du deuxième revêtement et des attributs de revêtement (710, 720, 730) du revêtement standard (610), dans lequel le premier revêtement est un échantillon du revêtement standard (610) de sorte que le premier revêtement et le revêtement standard (610) soient identiques avant leur application sur un actif, et dans lequel
le deuxième revêtement est un autre échantillon du revêtement standard (610) de sorte que le premier revêtement, le deuxième revêtement et le revêtement standard (610) soient identiques avant leur application sur un actif.

4. Système informatique (400) selon la revendication 3, dans lequel le premier rendu comporte un premier rendu tridimensionnel dans lequel le premier revêtement est appliqué sur une première surface incurvée, et/ou dans lequel le deuxième rendu comporte un deuxième rendu tridimensionnel dans lequel le deuxième revêtement est appliqué sur une deuxième surface incurvée.

5. Système informatique (400) selon l'une quelconque des revendications 3 à 4 précédentes, dans lequel le troisième rendu comporte un troisième rendu tridimensionnel dans lequel le revêtement standard (610) est appliqué sur une troisième surface incurvée.

6. Système informatique (400) selon l'une quelconque des revendications 3 à 5 précédentes, dans lequel le premier état de correspondance (685) comporte une représentation mathématique d'une différence mathématique entre les attributs de revêtement (710, 720, 730) du premier revêtement et les attributs de revêtement (710, 720, 730) du revêtement standard (610).

7. Système informatique (400) selon l'une quelconque des revendications 3 à 6, dans lequel le deuxième état de correspondance (685) comporte une différence de valeurs d'espace colorimétrique CIELab entre le premier revêtement et le revêtement standard (610).

8. Système informatique (400) selon l'une quelconque des revendications 3 à 7 précédentes, dans lequel l'interface utilisateur (700, 800, 900) affiche en outre un paramètre d'étalonnage (680) qui est applicable pour modifier une ou plusieurs conditions au niveau du premier système de revêtement pour aligner plus étroitement les applications ultérieures du premier revêtement au niveau du premier système de revêtement avec le revêtement standard (610).

9. Système informatique (400) selon l'une quelconque des revendications 3 à 8 précédentes, dans lequel l'exécution des instructions (425) amène en outre le système informatique (400) à :
déterminer si une ou plusieurs différences entre les attributs de revêtement (710, 720, 730) du premier revêtement et les attributs de revêtement (710, 720, 730) du revêtement standard (610) se trouvent dans un seuil de différence défini ; et
lorsqu'il est déterminé que les une ou plusieurs différences se trouvent dans le seuil de différence défini, amener le premier état de correspondance (685) à indiquer que le premier revêtement correspond suffisamment au revêtement standard (610).

10. Système informatique (400) selon l'une quelconque des revendications 3 à 9 précédentes, dans lequel le premier rendu, le deuxième rendu et le troisième rendu sont affichés à proximité les uns des autres.

11. Procédé d'affichage visuel de multiples revêtements d'essai (410, 630) différents sur une interface utilisateur (700, 800, 900) pour faciliter la comparaison avec un revêtement standard (610), dans lequel les multiples revêtements d'essai (410, 630) différents sont reçus en provenance de multiples systèmes de revêtement (625, 645) différents, ledit procédé comprenant :
la réception d'une première mesure numérique d'un premier revêtement qui a été précédemment appliqué sur un premier actif au niveau d'un premier système de revêtement (625) ;
la réception d'une deuxième mesure numérique d'un deuxième revêtement qui a été précédemment appliqué sur un deuxième actif au niveau d'un deuxième système de revêtement (645) ;
au sein d'une interface utilisateur (700, 800, 900), l'affichage :
d'un premier rendu représentatif du premier revêtement et de la première mesure numérique du premier revêtement ;
d'un deuxième rendu représentatif du deuxième revêtement et de la deuxième mesure numérique du deuxième revêtement ;
d'un troisième rendu représentatif du revêtement standard (610) ;
l'affichage d'un premier état de correspondance (685) entre le premier revêtement et le revêtement standard (610), dans lequel l'état de correspondance (685) est basé sur une comparaison entre des attributs de revêtement (710, 720, 730) du premier revêtement et des attributs de revêtement (710, 720, 730) du revêtement standard (610) ; et
l'affichage d'un deuxième état de correspondance (685) entre le deuxième revêtement et le revêtement standard (610), dans lequel le deuxième état de correspondance (685) est basé sur une comparaison entre des attributs de revêtement (710, 720, 730) du deuxième revêtement et des attributs de revêtement (710, 720, 730) du revêtement standard (610), dans lequel le premier revêtement, le deuxième revêtement, et le revêtement standard (610) sont identiques avant leur application sur un actif.

12. Procédé selon la revendication 11, dans lequel les attributs de revêtement (710, 720, 730) du revêtement standard (610) sont conservés dans une base de données de revêtements.

13. Procédé selon l'une quelconque des revendications 11 à 12 précédentes, dans lequel le procédé comporte en outre : le fait de déterminer si une ou plusieurs différences entre les attributs de revêtement (710, 720, 730) du premier revêtement et les attributs de revêtement (710, 720, 730) du revêtement standard (610) se trouvent dans un seuil de différence défini.

14. Procédé selon l'une quelconque des revendications 11 à 13 précédentes, dans lequel la réception de la première mesure numérique comporte en outre la réception de données de condition environnementale pour un environnement dans lequel le premier système de revêtement (625) est situé ou où le premier revêtement a été appliqué, et/ou dans lequel la réception de la deuxième mesure numérique comporte en outre la réception de données de condition environnementale pour un environnement dans lequel le deuxième système de revêtement (645) est situé ou où le deuxième revêtement a été appliqué.

15. Procédé selon l'une quelconque des revendications 11 à 14 précédentes, dans lequel le premier rendu comporte un rendu tridimensionnel (3D) d'un véhicule qui est revêtu du premier revêtement.
